# EUROPÄISCHE PATENTSCHRIFT

(11) **EP 3 495 288 B1**
(45) Veröffentlichungstag und Bekanntmachung des Hinweises auf die Patenterteilung: **20.01.2021**
(21) Anmeldenummer: 18000903.7
(22) Anmeldetag: 16.11.2018
(51) Int. Cl.: B65D 88/12, B65D 88/14, B65D 88/54

(54) **CONTAINER FÜR DEN TRANSPORT EINES FAHRZEUGS**
CONTAINER FOR THE TRANSPORT OF A VEHICLE
CONTENEUR POUR LE TRANSPORT D'UN VÉHICULE

(30) Priorität: 17.11.2017 DE 102017010689
(43) Veröffentlichungstag der Anmeldung: 12.06.2019
(73) Patentinhaber: IQS Holding GmbH, 85416 Langenbach (DE)
(72) Erfinder: Wegener, Norbert, D-84036 Kumhausen (DE)
(74) Vertreter: Kuhnen & Wacker Patent- und Rechtsanwaltsbüro PartG mbB

(56) Entgegenhaltungen:
- CN-A- 103 587 841
- DE-A1- 2 601 128
- DE-U1- 20 012 717
- DE-U1-202010 014 914
- JP-A- H07 117 483
- JP-A- 2004 268 759
- US-A1- 2004 232 021
- US-B2- 9 714 137

## Beschreibung

Die Erfindung betrifft einen Container für den Transport eines Fahrzeugs gemäß dem Oberbegriff des Anspruchs 1.

Ein Container zum Transport eines Fahrzeugs darin ist im Wesentlichen quaderförmig mit einer ersten und einer zweiten Stirnseite, zwei Längsseiten, einer Unterseite und einer Oberseite aufgebaut.

Mit einem solchen Container werden Fahrzeuge teilweise über große Entfernungen vor Beschädigungen geschützt transportiert. Außerdem sind darin transportierte Fahrzeuge vor unbefugtem Zugriff und unerlaubter Begutachtung geschützt. Dies ist insbesondere beim Transport von Prototypen, Rennfahrzeugen oder seltenen Oldtimern gewünscht.

Entsprechende Container kommen beispielsweise auch in der Luftfracht zum Einsatz. Dabei ist insbesondere darauf zu achten, dass solche Container in die Kontur eines Flugzeugladeraums passen. Allerdings besteht bei Containern des Standes der Technik dabei häufig die Problematik, dass diese nur schwer mit dem entsprechenden Fahrzeug zu beladen sind, da, wie erwähnt, diese Container eine gewisse Größe und damit auch einen gewissen maximalen Innenraum nicht überschreiten dürfen. Ein Fahrer, welcher ein Fahrzeug in einen solchen Container einfährt, muss über seitliche Öffnungen in der Lage sein, das Fahrzeug und den Container wieder zu verlassen. Dies erfordert unterschiedliche Öffnungen bzw. beschränkt die Größe der verladbaren Fahrzeuge in solchen Containern, da Fahrzeugtüren beispielsweise nicht weit genug zum Ausstieg geöffnet werden können. Auch die Stabilität solcher Container kann durch zusätzliche Öffnungen in Seitenwänden oder Stirnwänden davon leiden. Auch erfordern unterschiedliche mehrere Öffnungen bei solchen Containern, dass jede dieser Öffnungen einzeln gegen unbefugtes Öffnen gesichert werden muss.

Die deutsche Offenlegungsschrift DE 10 2010 042 510 A1 beschreibt einen Container für den Transport eines Fahrzeugs, bei welchem eine Haube mit einer Zufahrtsklappe über einem Bodenelement verschiebbar angeordnet ist. CN 103 587 841 A offenbart einen Container zum Transport eines Fahrzeugs darin nach dem Oberbegriff des Anspruchs 1.

Es ist daher die Aufgabe der vorliegenden Erfindung einen Container zum Transport eines Fahrzeugs darin, insbesondere einen Container zum Transport via Luftfracht, vorzusehen, welcher zum einen eine möglichst hohe Stabilität bietet, gleichzeitig eine möglichst einfache Be- und Entladung eines Fahrzeugs erlaubt und dabei von den Abmessungen möglichst optimal auf bestehende Laderäume in Flugzeugen abgestimmt ist.

Gelöst wird diese Aufgabe mit dem Gegenstand des unabhängigen Anspruchs 1. Vorteilhafte Weiterbildungen der Erfindung ergeben sich aus den anhängigen Ansprüchen
Der erfindungsgemäße Container zum Transport eines Fahrzeugs darin, insbesondere via Luftfracht, also insbesondere ein Luftfrachtcontainer, ist im Wesentlichen quaderförmig mit einer ersten und einer zweiten Stirnseite, zwei Längsseiten, einer Unterseite und einer Oberseite aufgebaut. Dabei kann im Bereich der Oberseite ein Teil des erfindungsgemäßen Containers so schräg verlaufend angeordnet sein, dass im Querschnitt eine Verladung in einen Flugzeugladeraum möglich ist. Der erfindungsgemäße Container weist ein Bodenelement, eine Rahmenstruktur und zumindest zwei Haubenelemente auf. Die zumindest zwei Haubenelemente decken im geschlossenen Zustand des Containers die Stirnseiten, die Längsseiten und die Oberseiten des Containers ab. Das Bodenelement deckt die Unterseite des Containers ab, so dass in geschlossenem Zustand das im Container verladene Fahrzeug von außen nicht sichtbar und auch nicht zugänglich ist. Die Rahmenstruktur baut auf dem Bodenelement auf und im Bereich der Oberseite sind die zumindest zwei Haubenelemente an der Rahmenstruktur so angelenkt, dass diese nach oben von dem Bodenelement weg in einem geöffneten Zustand des Containers hochklappbar sind. Im geöffneten Zustand des Containers ist somit ein einfaches Be- und Entladen des erfindungsgemäßen Containers möglich. Die Rahmenstruktur ist fest mit dem Bodenelement verbunden und die zumindest zwei Haubenelemente sind mit der Rahmenstruktur beweglich angelenkt verbunden.

Mit dem erfindungsgemäßen Container ist auf konstruktiv einfache Weise ein stabiles Transportbehältnis vorgesehen, welches bei einfacher Handhabbarkeit ohne größere Schwierigkeiten beim Be- und Entladen eine gute Stabilität bei relativ geringem Platzverbrauch bieten kann. Der entsprechende Container ist einfach verschließbar, da im Wesentlichen nur zwei Elemente, nämlich bevorzugt jeweils einstückige Haubenelemente, vorhanden sind, welche zum Öffnen entsprechend hochgeklappt werden.

Besonders einfach ist die Konstruktion des erfindungsgemäßen Containers, wenn die zumindest zwei Haubenelemente an der Rahmenstruktur über zumindest ein Drehelement einzeln schwenkbar angelenkt sind, insbesondere bevorzugt an einem zentral in Längsrichtung des Containers verlaufenden Holm der Rahmenstruktur. Einzeln schwenkbar heißt in diesem Zusammenhang, dass jedes der zumindest zwei Haubenelemente für sich hochklappbar sein kann, so dass gegebenenfalls ein Zugang zu einem Fahrzeug von nur einer Seite möglich ist, ohne das jeweils andere Haubenelement ebenfalls nach oben hochklappen zu müssen. Das Drehelement kann dabei jeweils ein Drehlager oder ein klavierbandartiges Element sein.

Bevorzugt erstreckt sich das zumindest eine Drehelement bzw. die resultierende Drehachse in Längsrichtung des Containers. Das zumindest eine Drehelement ist dabei zum Einen an der Rahmenstruktur befestigt, zum Anderen an zumindest einem der jeweiligen Haubenelemente.

Zur leichteren Handhabbarkeit insbesondere beim Öffnen des erfindungsgemäßen Containers sind die zumindest zwei Haubenelemente über Gasdruckfederelemente gegen die Rahmenstruktur so abgefedert, dass eine Öffnungsbewegung der zumindest zwei Haubenelemente beim Hochklappen in den geöffneten Zustand kräftemäßig zumindest unterstützt wird und die zumindest zwei Haubenelemente in dem geöffneten Zustand durch die Kraft der Gasdruckfederelemente gehalten werden. Bevorzugt ist an den jeweiligen Stirnseiten des erfindungsgemäßen Containers jedem Haubenelement jeweils ein Gasdruckfederelement zugeordnet.

Besonders einfach verschließbar ist der erfindungsgemäße Container bevorzugt dadurch, dass die zumindest zwei Haubenelemente mit dem Bodenelement über zumindest ein Verriegelungselement so verriegelbar sind, dass diese nicht von dem Bodenelement in dem geöffneten Zustand hochklappbar sind. Dazu kann das Verriegelungselement beispielsweise die beiden Haubenelemente miteinander verriegeln, es kann auch das Verriegelungselement jedes der Haubenelemente einzeln an der Rahmenstruktur verriegeln oder jedes der Haubenelemente kann mit der Anordnung im Bereich des Bodenelements verriegelt sein.

Bevorzugt kann das zumindest eine Verriegelungselement dabei mit Elementen zur Zollverplombung ausgestattet sein.

Um platzsparend eine Vorrichtung zum einfachen Einfahren eines Fahrzeugs in den erfindungsgemäßen Container vorzusehen, ist bevorzugt an der erste Stirnseite des Containers eine mit dem Bodenelement des Containers derart schwenkbar verbundene Rampe vorgesehen, die einerseits so in den Container eingeschwenkt werden kann, dass sie im Wesentlichen senkrecht zur Unterseite an der Rahmenstruktur arretiert werden kann und andererseits so nach außen geschwenkt werden kann, dass sie als Auffahrrampe für das Bodenelement dienen kann. Die senkrechte Lagerung ist von Vorteil, da dadurch wenig Stauraum für eine solche Auffahrrampe benötigt wird. Die Befestigung der Auffahrrampe an der Rahmenstruktur kann über Klemmhebel beispielsweise erfolgen. In geschlossenem Zustand des Containers befindet sich die Auffahrrampe somit im Inneren des erfindungsgemäßen Containers und ist entsprechend geschützt.

Um auch im im Wesentlichen geschlossenen Zustand des Containers gegebenenfalls Zugang, zumindest möglichen Sichtkontakt oder ähnliches zum Innern des Containers zu haben oder um weitere Elemente im Container-Innenbereich zu integrieren, kann erfindungsgemäß zumindest eines der zumindest zwei Haubenelemente eine zusätzliche Serviceöffnung aufweisen. Somit ist im Bereich der Serviceöffnung eine Manipulation möglich, ohne den gesamten Container öffnen zu müssen.

Zur besonders sicheren Befestigung des Fahrzeugs im Container weist dieser bevorzugt im Bereich des Bodenelements eine zum Auffahren mit dem Fahrzeug geeignete gelochte Auffahreinrichtung auf, so dass ein Fahrzeug an der Auffahreinrichtung arretiert werden kann.

Zur einfachen Handhabung des erfindungsgemäßen Containers beispielsweise bei Be- und Entladevorgängen von Flugzeugen weist der erfindungsgemäße Container im Bereich des Bodenelements an zumindest einer Längsseite einen Einfahrschuh für ein Lastaufnahmeelement eines Flurförderfahrzeugs auf.

Zur leichteren Handhabung und zum Rangieren unter beengten räumlichen Verhältnissen weist das Bodenelement bevorzugt an der zweiten Stirnseite zumindest ein um sich selbst drehbares Stützelement auf, auf dem der Container bewegt werden kann, wenn er an der ersten Stirnseite angehoben wird. Das drehbare Stützelement kann dabei im Wesentlichen rollenförmig oder in Form von zwei Rollen im jeweiligen Bereich der Stirnseite im Bodenelement vorgesehen sein.

Die Erfindung wird im Folgenden anhand der beispielhaft erläuterten Ausführungsform näher beschrieben werden.
- Figur 1: zeigt eine schematische perspektivische Ansicht eines Containers in geöffnetem Zustand gemäß einer Ausführungsform der Erfindung.
- Figur 2: zeigt eine schematische perspektivische Ansicht des Containers der Figur 1 in geschlossenem Zustand.

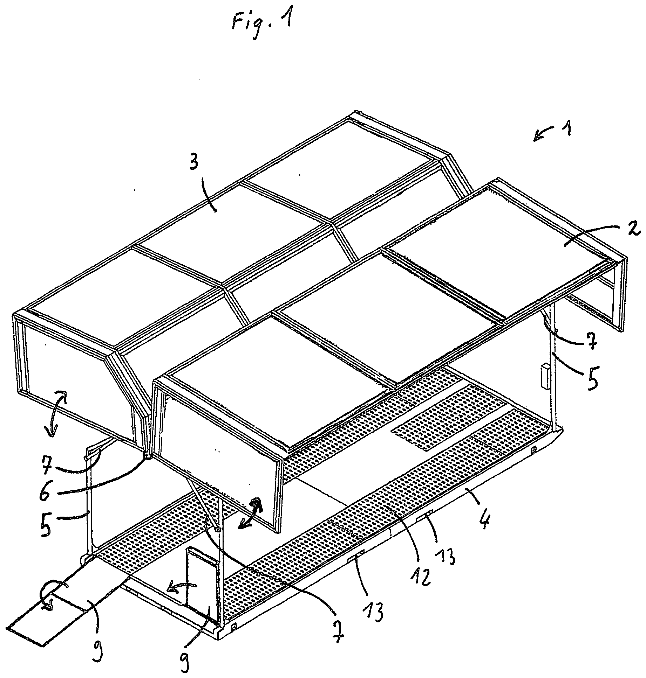

Figur 1 zeigt eine schematische perspektivische Ansicht eines Containers (1) in geöffnetem Zustand.

Der Container 1 weist eine Rahmenstruktur 5 auf, welche auf dem Bodenelement 4 dort aufbaut und welche im Bereich der Oberseite dort die zumindest zwei Haubenelemente 2, 3 an der Rahmenstruktur 5 über ein in Längsrichtung sich erstreckendes Drehelement 6 einzeln schwenkbar angelenkt aufweist, so dass, wie in Figur 1 dargestellt, die jeweiligen Haubenelemente nach oben vom Bodenelement 4 weg in einen geöffneten Zustand des Containers hochklappbar sind. Die Schwenkbewegungen der einzelnen Haubenelemente 2, 3 ist in der Figur 1 durch entsprechende Doppelpfeile dargestellt. Gasdruckfederelemente 7 federn die Haubenelemente 2, 3 gegen die Rahmenstruktur 5 so ab, dass im geöffneten Zustand diese durch die Kraft in Position gehalten werden können. Das Bodenelement 4 weist eine zum Auffahren mit einem Fahrzeug geeignete gelochte Auffahreinrichtung 12 auf, so dass ein Fahrzeug an der Auffahreinrichtung 12 arretiert werden kann. An der Längsseite des Bodenelements 4 ist ein Einfahrschuh 13 für ein Lastaufnahmeelement eines Flurförderfahrzeugs vorgesehen. An der ersten Stirnseite des Containers befindet sich eine mit dem Bodenelement 4 des Containers schwenkbar verbundene Rampe 9, welche einerseits so in den Container eingeschwenkt werden kann, dass sie im Wesentlichen senkrecht zur Unterseite an der Rahmenstruktur arretiert werden kann und andererseits so nach außen geschwenkt werden kann, dass sie als Rampe 9 zum Auffahren auf das Bodenelement 4 dienen kann. In der Darstellung der Figur 1 ist die Rampe 9 mehrteilig mit zwei jeweiligen Rampenelementen ausgebildet, welche zusammenklappbar sind und einer jeweiligen Seite eines Fahrzeugs zugeordnet sind, so dass sich die Rampe nicht über die gesamte Breite des Containers erstreckt, sondern lediglich im Bereich der auffahrenden Räder eines entsprechenden Fahrzeugs angeordnet sind. Dies ermöglicht eine entsprechende Gewichtsreduzierung.

Es sei angemerkt, dass die Rahmenstruktur 5 aus Metallstäben bestehen kann, welche die nötige Stabilität geben, wobei die Rahmenstruktur 5 fest mit dem Bodenelement 4 verbunden ist.

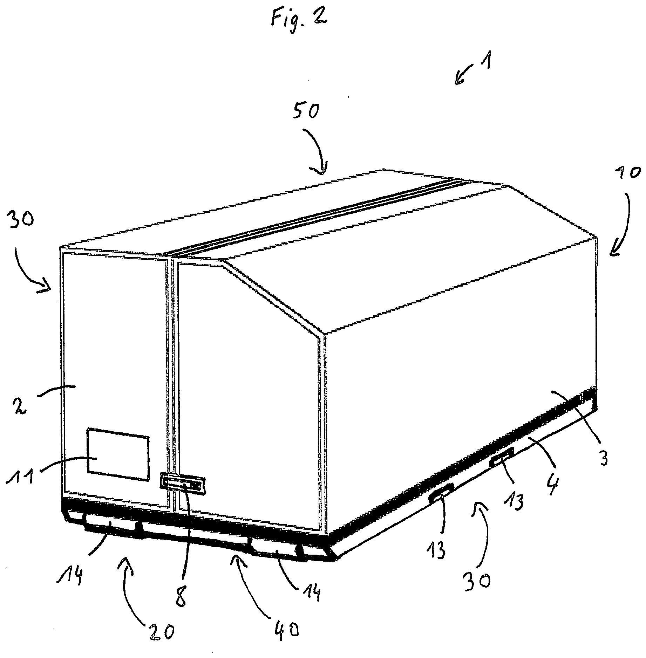

Der Container der Figur 1 wird in der Figur 2 in geschlossenem Zustand gezeigt. Komponenten mit gleichen Funktionen wie in Figur 1 werden mit gleichen Bezugszeichen gekennzeichnet und nicht extra erörtert.

In der Figur 2 ist gut die im Wesentlichen quaderförmige Gestaltung des erfindungsgemäßen Containers mit einer ersten 10 und einer zweiten 20 Stirnseite, zwei Längsseiten 30, einer Unterseite 40 und einer Oberseite 50 zu erkennen. Ein Verriegelungselement 8 verriegelt die zumindest zwei Haubenelemente 2, 3 so, dass diese im gezeigten geschlossenen und verriegelten Zustand nicht von dem Bodenelement in den geöffneten Zustand hochklappbar sind. In Figur 2 ist ebenfalls eine zusätzliche Serviceöffnung 11 im Bereich der zweiten Stirnseite 20 des Containers 1 zu erkennen. Ebenfalls ist in der Darstellung der Figur 2 die als zwei Rollen ausgeführte Ausführungsform des drehbaren Stützelements 14 zu erkennen, mit welcher der Container bewegt werden kann, wenn er an der ersten Stirnseite 10 angehoben wird.

Obwohl zumindest eine beispielhafte Ausführungsform in der vorhergehenden Beschreibung gezeigt wurde, können verschiedene Änderungen und Modifikationen vorgenommen werden. Die genannte Ausführungsform ist lediglich ein Beispiel und nicht dazu vorgesehen, den Gültigkeitsbereich, die Anwendbarkeit oder die Konfiguration des Containers in irgendeiner Weise zu beschränken. Vielmehr stellt die vorhergehende Beschreibung dem Fachmann einen Plan zur Umsetzung zumindest einer beispielhaften Ausführungsform des erfindungsgemäßen Containers zur Verfügung, wobei zahlreiche Änderungen in der Funktion und der Konstruktion des Containers von in der beispielhaften Ausführungsform beschriebenen Komponenten gemacht werden können, ohne den Schutzbereich der angefügten Ansprüche zu verlassen.

## Patentansprüche

1. Container (1) zum Transport eines Fahrzeugs darin, der im Wesentlichen quaderförmig mit einer ersten (10) und einer zweiten (20) Stirnseite, zwei Längsseiten (30), einer Unterseite (40) und einer Oberseite (50) aufgebaut ist, wobei der Container (1) ein Bodenelement (4), eine Rahmenstruktur (5) und zumindest zwei Haubenelemente (2, 3) aufweist und die Rahmenstruktur (5) auf dem Bodenelement (4) aufbaut und im Bereich der Oberseite (50) die zumindest zwei Haubenelemente (2, 3) an der Rahmenstruktur (5) so angelenkt sind, dass diese nach oben von dem Bodenelement (4) weg in einen geöffneten Zustand des Containers (1) hochklappbar sind, **dadurch gekennzeichnet, dass** die zumindest zwei Haubenelemente (2, 3) die Stirnseiten (10, 20), die Längsseiten (30) und die Oberseite (50) des Containers im geschlossenen Zustand abdecken und das Bodenelement (4) die Unterseite des Containers (1) abdeckt.

2. Vorrichtung nach Anspruch 1, **dadurch gekennzeichnet, dass** die zumindest zwei Haubenelemente (2, 3) an der Rahmenstruktur (5) über zumindest ein Drehelement (6) einzeln schwenkbar angelenkt sind.

3. Vorrichtung nach Anspruch 1 oder 2, **dadurch gekennzeichnet, dass** die zumindest zwei Haubenelemente (2, 3) über Gasdruckfederelemente (7) gegen die Rahmenstruktur (5) so abgefedert sind, dass eine Öffnungsbewegung der zumindest zwei Haubenelemente (2, 3) beim Hochklappen in den geöffneten Zustand kräftemäßig zumindest unterstützt wird und die zumindest zwei Haubenelemente (2, 3) in dem geöffneten Zustand durch die Kraft der Gasdruckfederelemente (7) gehalten werden.

4. Vorrichtung nach einem der Ansprüche 1 bis 3, **dadurch gekennzeichnet, dass** die zumindest zwei Haubenelemente (2, 3) über zumindest ein Verriegelungselement (8) so verriegelbar sind, dass diese im geschlossenen und verriegeltem Zustand nicht von dem Bodenelement (4) in den geöffneten Zustand hochklappar sind.

5. Vorrichtung nach einem der Ansprüche 1 bis 4, **dadurch gekennzeichnet, dass** sich an der erste Stirnseite (10) eine mit dem Bodenelement (4) des Containers (1) derart schwenkbar verbundene Rampe (9) befindet, die einerseits so in den Container (1) eingeschwenkt werden kann, dass sie im Wesentlichen senkrecht zur Unterseite (40) an der Rahmenstruktur (5) arretiert werden kann, und andererseits so nach außen geschwenkt werden kann, dass sie als Rampe (9) zum Auffahren auf das Bodenelement (4) dienen kann.

6. Vorrichtung nach einem der vorangehenden Ansprüche, **dadurch gekennzeichnet, dass** zumindest eines der zumindest zwei Haubenelemente (2, 3) eine zusätzliche Serviceöffnung (11) aufweist.

7. Vorrichtung nach einem der vorangehenden Ansprüche, **dadurch gekennzeichnet, dass** das Bodenelement (4) eine zum Auffahren mit einem Fahrzeug geeignete gelochte Auffahreinrichtung (12) aufweist, so dass ein Fahrzeug an der Auffahreinrichtung (12) arretiert werden kann.

8. Vorrichtung nach einem der vorangehenden Ansprüche, **dadurch gekennzeichnet, dass** das Bodenelement (4) an einer Längsseite einen Einfahrschuh (13) für ein Lastaufnahmeelement eines Flurförderfahrzeugs aufweist.

9. Vorrichtung nach einem der vorangehenden Ansprüche, **dadurch gekennzeichnet, dass** das Bodenelement (4) an der zweiten Stirnseite (20) zumindest ein um sich selbst drehbares Stützelement (14) aufweist, auf dem der Container (1) bewegt werden kann, wenn er an der ersten Stirnseite (10) angehoben wird.

## Claims

1. A container (1) for transporting a vehicle therein is essentially rectangular in construction with a first (10) and a second (20) end face, two long sides (30), a bottom (40) and a top (50), wherein
the container (1) comprises a floor element (4), a frame structure (5) and at least two cover elements (2, 3) and the frame structure (5) builds on the floor element (4) and, in the region of the top (50), the at least two cover elements (2, 3) are hinged to the frame structure (5) in such a way that they can be swung upward away from the floor element (4) when the container (1) is in an open state,
**characterized in that**
the at least two cover elements (2, 3) cover the end faces (10, 20), the long sides (30), and the top (50) of the container when in a closed state, and the floor element (4) covers the bottom of the container (1).

2. The device according to claim 1, **characterized in that** the at least two cover elements (2, 3) are hinged to the frame structure (5) by at least one rotary element (6) so as to be individually pivotable.

3. The device according to claim 1 or 2, **characterized in that** the at least two cover elements (2, 3) are spring-loaded by gas spring elements (7) with respect to the frame structure (5) such that an opening motion of the at least two cover elements (2, 3) is at least supported in terms of force when being swung up into the open state, and the at least two cover elements (2, 3) are held in the open state by the force of the gas spring elements (7).

4. The device according to any one of claims 1 to 3, **characterized in that** the at least two cover elements (2, 3) can be locked by at least one locking element (8) in such a manner that they cannot be swung up into the open state from the floor element (4) when they are locked in the closed state.

5. The device according to any one of claims 1 to 4, **characterized in that** a ramp (9) that is pivotably attached to the floor element (4) of the container (1) is located at the first end face (10) such that, on the one hand, it can be pivoted into the container (1) so that it can be locked to the frame structure (5) essentially perpendicular to the bottom (40), and, on the other hand, it can be pivoted outward so that it can serve as a ramp (9) for driving onto the floor element (4).

6. The device according to any one of the preceding claims, **characterized in that** at least one of the at least two cover elements (2, 3) has an additional service opening (11).

7. The device according to any one of the preceding claims, **characterized in that** the floor element (4) has a perforated drive-on device (12) suitable for driving a vehicle onto so that a vehicle can be locked in place on the drive-on device (12).

8. The device according to any one of the preceding claims, **characterized in that** the floor element (4) has, on a long side, a pocket (13) for a lifting element of an industrial truck.

9. The device according to any one of the preceding claims, **characterized in that** the floor element (4) has, at the second end face (20), at least one support element (4) that can rotate about itself, on which the container (1) can be moved when it is lifted at the first end face (10).

## Revendications

1. Conteneur (1) pour le transport d'un véhicule, qui est pratiquement de forme parallélépipédique avec un premier côté frontal (10) et un second côté frontal (20), deux côtés longitudinaux (30), un côté inférieur (40) et un côté supérieur (50),
le conteneur (1) ayant un élément de sol (4), une structure de cadre (5) et au moins deux éléments de capot (2, 3), et
la structure de cadre (5) étant construite sur l'élément de sol (4) et dans la zone du côté supérieur (50), les deux éléments de capot (2, 3) sont articulés sur la structure de cadre (5) de façon à pouvoir être relevés par basculement pour dégager vers le haut à l'opposé de l'élément de sol (4), dans l'état ouvert du conteneur (1),
**caractérisé en ce que**
les deux éléments de capot (2, 3) couvrent les côtés frontaux (10, 20), les grands côtés (30) et le côté supérieur (50) du conteneur à l'état fermé et l'élément de sol (4) couvre le côté inférieur du conteneur (1).

2. Dispositif selon la revendication 1,
**caractérisé en ce que**
les deux éléments de capot (2, 3) sont articulés à la structure de cadre (5) par au moins un élément tournant (6) en pouvant être pivotés séparément.

3. Dispositif selon la revendication 1 ou 2,
**caractérisé en ce que**
les deux éléments de capot (2, 3) sont suspendus par rapport à la structure de cadre (5) par les éléments de ressort à gaz (7) pour que le mouvement d'ouverture des deux éléments de capot (2, 3) lorsqu'ils sont relevés par basculement en position ouverte, soient soutenus au moins pour l'exercice de l'effort et les deux éléments de capot (2, 3) soient tenus en position ouverte par la force développée par les éléments de ressort à gaz (7).

4. Dispositif selon l'une des revendications 1 à 3,
**caractérisé en ce que**
les deux éléments de capot (2, 3) se verrouillent à l'aide d'au moins un élément de verrouillage (8) de façon qu'à l'état fermé et verrouillé, ils ne puissent être relevés à l'état ouvert par rapport à l'élément de sol (4).

5. Dispositif selon l'une des revendications 1 à 4,
**caractérisé en ce que**
le premier côté frontal (10) comporte une rampe (9) reliée à l'élément de sol (4) du conteneur (1) de façon à pouvoir basculer, et qui peut, d'une part, être ainsi rentrée vers le conteneur (1) pour être pratiquement perpendiculaire au côté inférieur (40) en étant bloquée à la structure de cadre (5) et d'autre part, pour pouvoir être basculée vers l'extérieur pour servir de rampe (9) pour la montée jusqu'à l'élément de sol (4).

6. Dispositif selon l'une des revendications précédentes,
**caractérisé en ce que**
au moins l'un des deux éléments de capot (2, 3) comporte une ouverture de service complémentaire (11).

7. Dispositif selon l'une des revendications précédentes,
**caractérisé en ce que**
l'élément de sol (4) comporte une installation de montée (12) perforée, convenant pour la montée (12) par un véhicule, de façon que le véhicule puisse être bloqué dans la direction de montée.

8. Dispositif selon l'une des revendications précédentes,
**caractérisé en ce que**
l'élément de sol (4) comporte sur un grand côté, un patin d'entrée (13) pour un élément de réception de charge d'un chariot élévateur.

9. Dispositif selon l'une des revendications précédentes,
**caractérisé en ce que**
l'élément de sol (4) comporte sur le second côté frontal (20), au moins un élément d'appui (14) qui pivote de lui-même et sur lequel le conteneur (1) peut être déplacé lorsqu'il est soulevé contre le premier côté frontal (10).
